# EUROPEAN PATENT APPLICATION

(11) **EP 4 835 854 A1**
(43) Date of publication of application: **04.11.2026**
(21) Application number: 26171186.5
(22) Date of filing: 08.04.2026
(51) Int. Cl.: G07F 17/32

(54) **GAME MANAGEMENT SYSTEM**

(30) Priority: 01.05.2025 JP 2025076169
(71) Applicant: Angel Group Co., Ltd., Higashiomi-shi, Shiga 527-0232 (JP)
(72) Inventor: SHIGETA, Yasushi, Higashiomi-shi, Shiga, 527-0232 (JP)
(74) Representative: Bardehle Pagenberg Partnerschaft mbB Patentanwälte Rechtsanwälte

(57) **Abstract**

A game management system (100) comprises: cameras (11, 12) configured to generate an image by capturing a table surface (72) of a blackjack table from diagonally above; and a card detection device (301) configured to detect a playing card by analyzing the image using artificial intelligence to detect a number printed on the playing card placed at an arbitrary position on the table surface (72), the number representing a rank and having an undefined angle and size when observed. Thus, the prior art for managing a game in a casino can be improved.

## Description

### CROSS REFERENCE TO RELATED APPLICATION

This nonprovisional application is based on Japanese Patent Application No. 2025-076169 filed with the Japan Patent Office on May 1st, 2025, the entire contents of which are hereby incorporated by reference.

### TECHNICAL FIELD

The present disclosure relates to a game management system for managing a game in a casino.

### BACKGROUND

In a casino, analog games are played using casino equipment such as a game table, playing cards, and gaming chips. Digitizing information of the games played using such actual casino equipment is effective from the viewpoints of management analysis in the casino, discovery of fraudulent acts, smooth game operation, and provision of convenience to players.

For example, regarding a blackjack game played using playing cards and gaming chips at a game table, by capturing an image of the playing cards and the gaming chips on the table and analyzing the image to recognize a bet amount and a hand of each player, a patron rating of the player becomes possible, or fraudulent acts by a player or a dealer can be discovered (for example, US Patent No. 11,660,541).

### SUMMARY

An object of the present disclosure is to improve the prior art for managing a game in a casino.

A game management system according to an aspect comprises: a camera configured to generate an image by capturing a table surface of a game table from diagonally above; and a card detection device configured to detect a card by analyzing the image using artificial intelligence to detect a number printed on the card placed at an arbitrary position on the table surface, the number representing a rank and having an undefined angle and size when observed.

In the game management system described above, the game table may be a blackjack table or a poker table, and the card may be a card constituting a hand of a player or a dealer.

In the game management system described above, the card detection device may be configured to detect the card by detecting a pair of the numbers.

In the game management system described above, the card detection device may be configured to detect the card by detecting a set of the number and a mark representing a suit, the number and the mark being in a predetermined positional relationship.

The game management system described above may further include: a rank recognition device configured to recognize the rank of the card detected by the card detection device by analyzing the image using artificial intelligence; and a hand recognition device configured to recognize a group consisting of a plurality of cards detected by the card detection device, and to recognize a hand for each group based on the ranks recognized by the rank recognition device for the plurality of cards included in the group.

The game management system described above may further include an orientation determination device configured to determine an orientation of the card based on an orientation of the rank and/or the suit, or an arrangement direction of the rank and the suit detected by the card detection device.

The game management system described above may further include a position determination device configured to determine a position of the card based on positions of the rank and the suit detected by the card detection device.

A game management system according to another aspect of the present disclosure comprises: a camera configured to generate an image by capturing a table surface of a blackjack table from diagonally above; a hand recognition device configured to recognize a hand by analyzing the image using artificial intelligence; a bet recognition device configured to recognize a bet by a chip by analyzing the image using artificial intelligence; and a play recognition device configured to recognize play content according to a rule of a game based on the hand recognized by the hand recognition device and the bet recognized by the bet recognition device. The play recognition device is capable of recognizing that a split has been performed and that a double down has been performed as an action of a player, makes a first determination as to whether or not one hand of the player has been divided into two hands based on a plurality of the images captured in time series, makes a second determination as to whether or not the bet of the player has been increased based on the plurality of the images captured in time series, and recognizes whether or not the split has been performed and whether or not the double down has been performed based on results of the first and second determinations.

In the game management system described above, the play recognition device may recognize that the split has been performed when determining in the first determination that the one hand of the player has been divided into two hands and determining in the second determination that the bet of the player has been increased.

In the game management system described above, the play recognition device may recognize that the double down has been performed when determining in the first determination that the one hand of the player has not been divided into two hands and determining in the second determination that the bet of the player has been increased.

The game management system described above may further include a hand sign recognition device configured to recognize a hand sign by analyzing the image using artificial intelligence, and the play recognition device may further recognize whether or not the split has been performed based also on the hand sign detected by the hand sign recognition device.

The game management system described above may further include a hand sign recognition device configured to recognize a hand sign by analyzing the image using artificial intelligence, and the play recognition device may further recognize whether or not the double down has been performed based also on the hand sign recognized by the hand sign recognition device.

In the game management system described above, the play recognition device may recognize that the two hands are hands of the same player when recognizing that the split has been performed.

In the game management system described above, the blackjack table may have a plurality of playing positions, and the hand recognition device may associate the two hands with the same playing position.

The game management system described above may further include a player recognition device configured to recognize a player participating in a game, wherein the hand recognition device may associate the hand with the player recognized by the player recognition device, and the hand recognition device may associate the two hands with the same player.

In the game management system described above, the hand recognition device may determine whether the one hand is splittable based on a rule.

In the game management system described above, the play recognition device may determine whether or not the bet of the player has been doubled as the second determination.

A game management system according to another aspect of the present disclosure comprises: a camera configured to capture an image of a table surface of a blackjack table; a hand recognition device configured to recognize a hand of cards distributed on the table surface by detecting a rank and a suit by analyzing the image; a bet recognition device configured to recognize a bet by a chip placed on the table surface; and a play recognition device configured to determine whether a blackjack game played on the table surface complies with a rule based on the hand recognized by the hand recognition device and the bet recognized by the bet recognition device. The play recognition device determines that an insurance bet has been performed for the hand recognized by the hand recognition device based on bets recognized in time series by the bet recognition device when a face-up card of a dealer is recognized as an ace by the hand recognition device, and determines that the insurance bet has succeeded when it is determined that the insurance bet has been performed and a hand of the dealer is recognized as blackjack by the hand recognition device.

A game management system according to another aspect of the present disclosure comprises: a camera configured to capture an image of a table surface of a blackjack table; a hand recognition device configured to recognize a hand of cards distributed on the table surface by detecting a rank and a suit by analyzing the image; a bet recognition device configured to recognize a bet by a chip placed on the table surface; and a play recognition device configured to determine whether a blackjack game played on the table surface complies with a rule based on the hand recognized by the hand recognition device and the bet recognized by the bet recognition device. The play recognition device determines that a reduction is a surrender complying with the rule by determining that the bet has been reduced during a game based on bets recognized in time series by the bet recognition device, and when determining that the reduction has been made, determining whether a situation allows the surrender based on the rule, and determining whether the reduction reduces half of an original bet based on the bets recognized in time series by the bet recognition device.

The game management system described above may further include a hand sign recognition device configured to recognize a hand sign by analyzing the image using artificial intelligence, and the play recognition device may recognize that the surrender has been performed based on the hand sign recognized by the hand sign recognition device.

### BRIEF DESCRIPTION OF THE DRAWINGS

FIG. 1 is an external view of a game management system according to an embodiment;
FIG. 2 is a diagram showing an example of a layout of a table surface according to the embodiment;
FIG. 3 is a block diagram showing a configuration of the game management system according to the embodiment;
FIG. 4 is a diagram showing an example of an image obtained by capturing with a camera according to the embodiment;
FIG. 5 is a diagram showing an example of a playing card according to the embodiment;
FIG. 6 is a diagram illustrating image analysis by a card detection device according to the embodiment;
FIG. 7 is a diagram showing an example of an arrangement of playing cards according to the embodiment;
FIG. 8 is a diagram showing an example of an arrangement of playing cards according to the embodiment;
FIG. 9 is a diagram showing an example of a hand sign (hit) according to the embodiment;
FIG. 10 is a diagram showing an example of a hand sign (hit) according to the embodiment;
FIG. 11 is a diagram showing an example of a hand sign (stand) according to the embodiment;
FIG. 12 is a diagram showing an example of a hand sign (split) according to the embodiment;
FIG. 13 is a diagram showing an example of a hand sign (double down) according to the embodiment;
FIG. 14 is a diagram showing an example of a hand sign (surrender) according to the embodiment;
FIG. 15 is a diagram showing an example of an image captured by the camera according to the embodiment;
FIG. 16 is a diagram showing a result of performing player recognition on the image of FIG. 15 by a player recognition device according to the embodiment;
FIG. 17 is a diagram showing an example of a blackjack action (split) according to the embodiment;
FIG. 18 is a diagram showing an example of a blackjack action (split) according to the embodiment;
FIG. 19 is a diagram showing an example of a blackjack action (double down) according to the embodiment;
FIG. 20 is a diagram showing an example of a blackjack action (double down) according to the embodiment;
FIG. 21 is a diagram showing an example of a blackjack action (double down) according to the embodiment;
FIG. 22 is a diagram showing an example of a blackjack action (insurance) according to the embodiment;
FIG. 23 is a diagram showing an example of a blackjack action (even money) according to the embodiment;
FIG. 24 is a diagram showing an example of a blackjack action (even money) according to the embodiment; and
FIG. 25 is a diagram showing an example of a blackjack action according to the embodiment.

### EMBODIMENTS

Hereinafter, embodiments for carrying out the disclosure will be described. However, the embodiments described below are merely examples, and the present disclosure is not limited to the embodiments described below. Moreover, each element of a plurality of embodiments can be arbitrarily combined.

Hereinafter, an example in which the game management system of the present disclosure is applied to manage a blackjack game will be described, but the present disclosure is applicable to baccarat, poker, and other casino games.

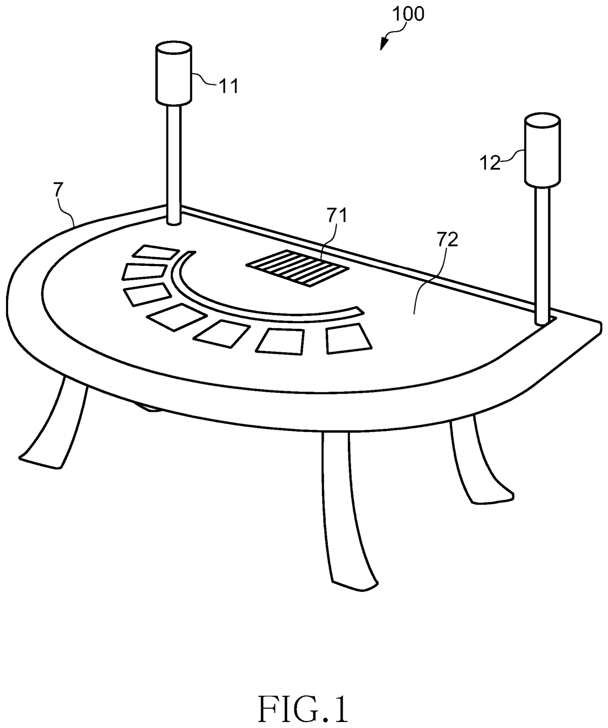

FIG. 1 is an external view of a game management system according to an embodiment of the present disclosure. A game management system 100 is configured at a game table 7 for blackjack. A table surface 72 of the game table 7 is provided with a chip tray 71 for supplementing chips of a dealer, and the dealer sits in front of this chip tray 71 to deal a game.

In the game table 7, a side opposite to a side where the dealer is located has a round shape, and a plurality of players can be positioned along an edge of the round shape to play blackjack. The game table 7 is provided with a plurality of playing positions for the plurality of players.

On both left and right sides of the dealer at the game table 7, cameras 11 and 12 for capturing an image of the table surface of the game table 7 from diagonally above are provided. The cameras 11 and 12 capture not only the playing cards and the chips on the table surface but also the players. Each of the cameras 11 and 12 may include a plurality of cameras having different capturing directions, angles of view, resolutions, and the like. In this case, each of the plurality of cameras may be set to a setting suitable for capturing playing cards, a setting suitable for capturing gaming chips, and a setting suitable for capturing players.

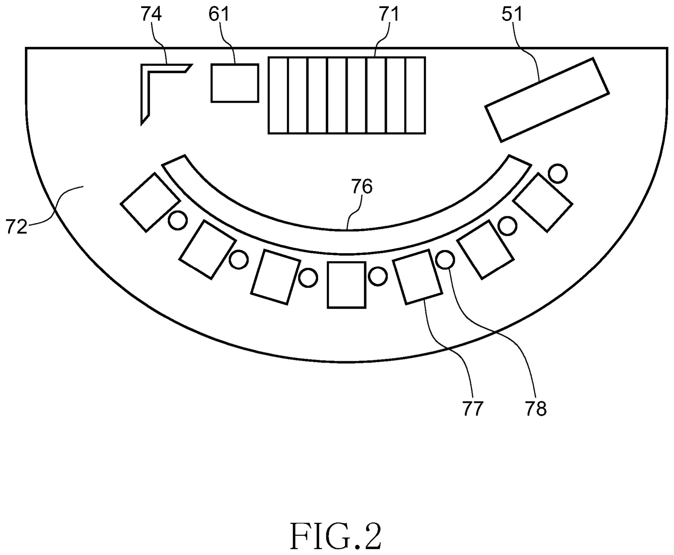

FIG. 2 is a diagram showing an example of a layout of the table surface according to the embodiment of the present disclosure. On the table surface 72, a plurality of betting areas 77 corresponding to a plurality of player positions are drawn for the blackjack game. In the example of FIG. 2, seven betting areas 77 are provided corresponding to seven player positions. Each betting area 77 is provided with a side bet area 78. The side bet may be, for example, a betting area for betting on a pair. Further, an insurance bet area 76 for performing an insurance bet is drawn on the dealer side of the betting areas 77 and the side bet areas 78. The insurance bet area 76 is provided as one elongated betting area continuous across the plurality of player positions.

The chip tray 71 is provided at the center of the dealer position. An electronic shoe 51 is placed on the table surface 72 on the right side of the dealer position (left side as viewed from the dealer). A playing card stocker 74 for stocking playing cards used in the game is provided on the table surface 72 on the left side of the dealer position (right side as viewed from the dealer). A display panel 61 for displaying various information to support operations by the dealer is provided next to the chip tray 71.

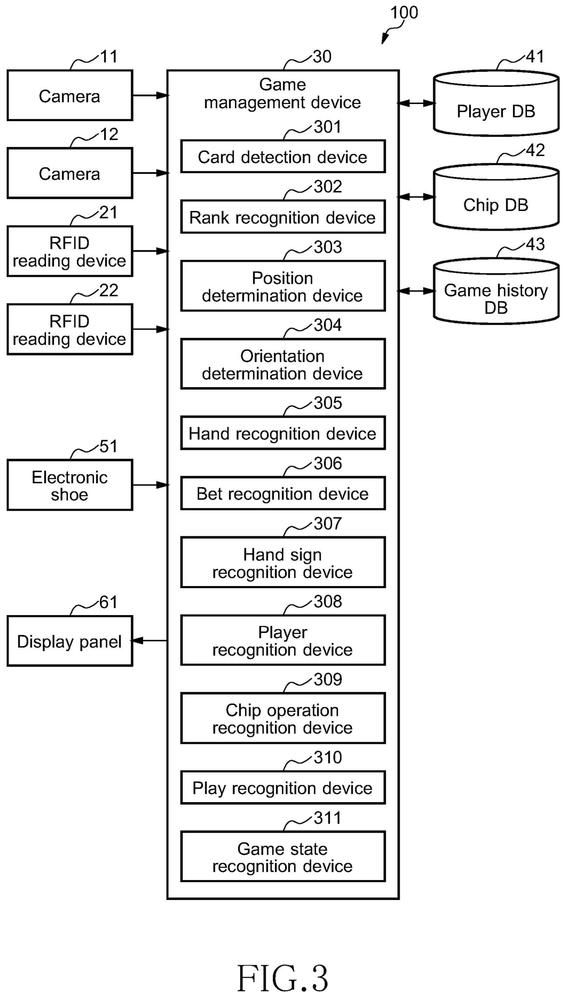

FIG. 3 is a block diagram showing a configuration of the game management system 100 according to the embodiment of the present disclosure. The game management system 100 comprises the cameras 11 and 12, RFID reading devices 21 and 22, a game management device 30, a player database 41, a chip database 42, a game history database 43, the electronic shoe 51, and the display panel 61.

In the present embodiment, an RFID tag is embedded in a gaming chip. A chip ID for uniquely identifying the gaming chip is stored in the RFID tag.

An RFID reading device 21 reads the RFID tag of the gaming chip accommodated in the chip tray 71. An RFID reading device 22 reads the RFID tag of the gaming chip bet in the betting area. The RFID reading devices 21 and 22 each include one or a plurality of RFID antennas and a reader configured to drive the antennas to acquire reading signals of the antennas.

The RFID reading device 22 has an RFID antenna in each of the seven betting areas 77, and is capable of distinctly reading the gaming chips bet in each betting area 77. A jamming antenna may be provided corresponding to each RFID antenna to restrict the RFID tag of the gaming chip in each betting area from being read by the RFID antenna of an adjacent betting area. Alternatively, without providing the jamming antenna, on the assumption that a gaming chip in a certain betting area is read by a plurality of adjacent RFID antennas, it may be determined where the gaming chip is located based on reading strengths of the plurality of RFID antennas.

The RFID reading device 22 may drive the plurality of RFID antennas in sequence and drive the jamming antenna for the betting area 77 around the RFID antenna performing reading in synchronization therewith, thereby distinctly reading the gaming chips in each betting area 77 with a time difference.

The cameras 11 and 12 capture the table surface 72 of the game table 7 from diagonally above to generate an image. Further, as described above, the cameras 11 and 12 also capture a player playing a game at the game table 7.

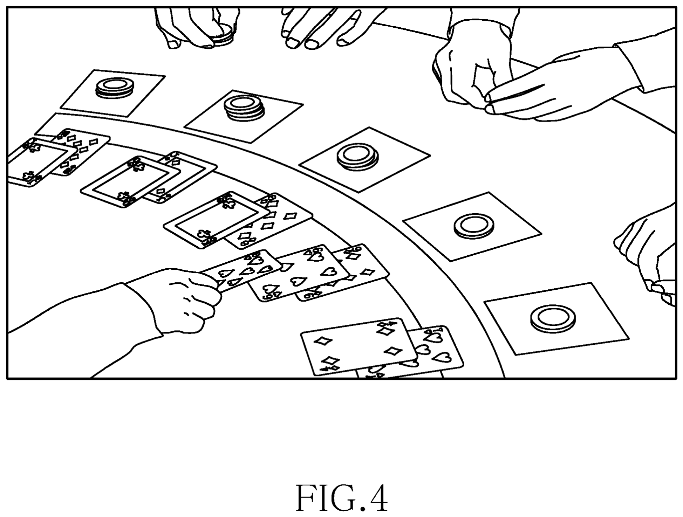

FIG. 4 is a diagram showing an example of an image obtained by capturing with the camera according to the embodiment of the present disclosure. The image shows gaming chips bet in the betting area to play blackjack, playing cards distributed to each player, and hands of the player and the dealer. The cameras 11 and 12 capture an image in response to a predetermined trigger to generate the image, and output the image to the game management device 30. Alternatively, the cameras 11 and 12 may capture images at predetermined intervals to generate the images, and output the images to the game management device 30 as necessary.

Returning to FIG. 3, the electronic shoe 51 accommodates playing cards of a plurality of decks. The dealer draws the playing cards one by one from the electronic shoe 51 in order from a top playing card. The electronic shoe 51 recognizes the rank and the suit of the playing card being drawn by reading the playing card being drawn.

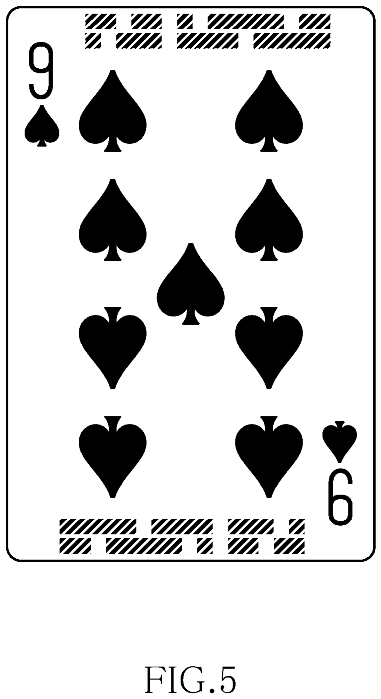

FIG. 5 is a diagram showing an example of a playing card according to the embodiment of the present disclosure. At an upper left corner and a lower right corner of the playing card, a number (1 to 10, J, Q, K) indicating the rank of the playing card and a mark (spade, club, heart, diamond) indicating the suit are vertically arranged. The rank of the playing card is represented by the numbers 1 to 10 and three types of alphabets J, Q, and K. In this specification, J, Q, and K representing the rank are also expressed as "number" together with the numbers 1 to 10.

Further, a code indicating the rank and the suit is printed on an edge portion on a short side of the playing card. The code is printed with UV ink that becomes visible by irradiation with ultraviolet rays, and is invisible under visible light. In the center of the playing card, marks of the corresponding suit are printed in a number corresponding to the rank. On picture cards (J, Q, K), corresponding pictures are drawn.

The electronic shoe 51 comprises an ultraviolet lamp and a sensor. The electronic shoe 51 recognizes the rank and the suit of the drawn playing card by irradiating the edge portion on the short side of the drawn playing card with ultraviolet rays and detecting the code with the sensor, and outputs a recognition result to the game management device 30. The sensor outputs an ON/OFF signal corresponding to the code moving in front of the sensor as the playing card is drawn. The electronic shoe 51 recognizes the rank and the suit represented by the code based on the ON/OFF signal output by the sensor, and outputs a recognition result to the game management device 30.

Further, when detecting that the playing card has been drawn, the electronic shoe 51 outputs a signal indicating the fact to the game management device 30. Upon receiving this signal, the game management device 30 instructs the cameras 11 and 12 to capture an image.

The game management device 30 comprises a plurality of devices for managing a game. The game management device 30 is configured by a computer including an arithmetic processing unit, a memory, a storage device, and the like. Each device included in the game management device 30 may be configured by the arithmetic processing unit reading a computer program stored in the storage device into the memory and executing the computer program.

A card detection device 301 detects a card by analyzing the image using artificial intelligence to detect a number representing a rank printed on a playing card placed at an arbitrary position on the table surface 72. For the number printed on the playing card, an observed angle is undefined and a size in the image is also undefined depending on a position of the playing card on the table surface 72.

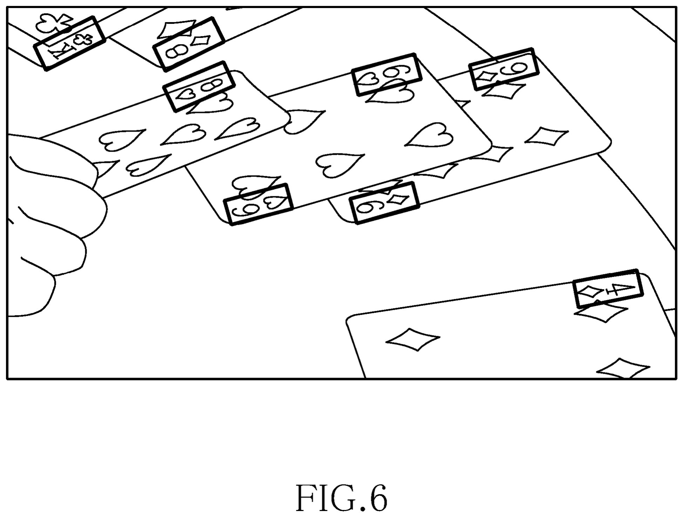

FIG. 6 is a diagram illustrating image analysis by the card detection device according to the embodiment of the present disclosure. A playing card relatively close to the cameras 11 and 12 has a relatively large elevation angle as viewed from the cameras, and appears relatively large in the image. On the other hand, a playing card relatively far from the cameras 11 and 12 has a relatively small elevation angle as viewed from the cameras, and appears relatively small in the image. The card detection device 301 recognizes the number by performing image analysis on the image. For such recognition of numbers, for example, an inference model using a neural network can be used, or a machine learning model such as SVM can also be used.

As described above, since appearance of the numbers printed on the playing cards is not constant depending on a positional relationship between the camera and the playing card, it is difficult to detect the numbers by simple template matching, and more advanced image recognition processing, such as extracting and matching at least feature amounts, is required. In the present application, a technique for performing such advanced image recognition is referred to as artificial intelligence, and the card detection device 301 analyzes an image using such artificial intelligence to detect a number on a playing card placed at an arbitrary position on the table surface 72 in an arbitrary orientation.

As a conventional technique, a technique of recognizing a player hand by detecting a playing card itself is known, but the card detection device 301 of the present embodiment detects not the playing card itself but the number of the rank and a symbol of the suit printed thereon. Thereby, as shown in FIG. 4, even if the entire playing card cannot be observed because the playing cards are stacked and placed on the table surface 72 according to the manner of blackjack or hidden by the hand of the dealer, according to the card detection device 301 of the present embodiment, the playing card can be detected simply by finding a combination of the rank and the suit printed in the upper left corner and the lower right corner.

In the present embodiment, the card detection device 301 detects the playing card by searching for a combination of the number (rank) and the symbol (suit) printed in an upper left corner and a lower right corner of the playing card. However, instead of this, the card detection device 301 may detect the playing card by detecting only the numbers (ranks) printed in the upper left corner and the lower right corner of the playing card, or may detect the playing card by detecting only the symbols (suits) printed in the upper left corner and the lower right corner of the playing card.

Further, the card detection device 301 may detect the playing card by detecting a pair of the number representing the rank and the symbol representing the suit. As described above, since the number representing the rank and the symbol representing the suit are printed in the upper left corner and the lower right corner of the playing card respectively, the card detection device 301 may determine that the playing card exists there when detecting these combinations. Also in this case, the card detection device 301 may detect the playing card by detecting a pair of the numbers representing the rank, or may detect the playing card by detecting a pair of the symbols representing the suit.

Further, when the detected number and the detected symbol are in a predetermined positional relationship, that is, a positional relationship in which they are vertically arranged with substantially the same size, the card detection device 301 may determine that the number and the symbol are the number and the symbol representing the rank and the suit of the playing card, and determine that the playing card exists there. According to this, even if some number not intended for indicating the rank of the playing card is detected from the image and some symbol (spade, club, heart, diamond) not intended for indicating the suit of the playing card is detected, for example, even if a number or a symbol is detected from clothes of the player, if they are not in the predetermined positional relationship, the card detection device 301 does not determine that the playing card exists.

A rank recognition device 302 is configured to recognize the rank of the card detected by the card detection device 301 by analyzing the image using artificial intelligence. The rank recognition device 302 recognizes the rank using a result of image recognition in the card detection device 301. When the card detection device 301 detects that the number is present, the rank recognition device 302 recognizes the content of the number, that is, the rank, by performing image recognition again on the detected portion. The rank recognition device 302 may have a function of recognizing the suit in the same manner.

A position determination device 303 determines a position of the card based on the combination of the number (rank) and the symbol (suit) detected by the card detection device 301. As described above, the cameras 11 and 12 perform capturing in response to an instruction from the game management device 30 when the playing card is drawn from the electronic shoe 51. When the playing card is drawn from the electronic shoe 51, the playing card is carried to a distribution position by the dealer. This movement is completed when the next playing card is drawn from the electronic shoe 51. Therefore, by performing capturing at a timing when the playing card is drawn from the electronic shoe 51, movement of a previous playing card is completed, and the cameras 11 and 12 capture the table surface 72 in such a state, thereby making it possible to capture the playing card after the movement is completed.

The position determination device 303 recognizes a playing card newly distributed on the table surface 72 and determines a position thereof by comparing the latest image with an image immediately preceding the latest image. The position of the playing card is expressed by coordinates on the table surface 72 by being converted from coordinates in the image to the coordinates on the table surface 72. Thereby, even if the same playing card is detected by the camera 11 and the camera 12, those playing cards are integrated by the coordinates on the table surface 72.

The position determination device 303 may determine the position of the playing card based on a pair of combinations of the number and the symbol detected by the card detection device 301. That is, when two combinations of the same number and symbol are detected, it may be determined that the playing card exists such that these combinations form a diagonal line.

An orientation determination device 304 determines an orientation of the playing card distributed on the table surface 72 based on an orientation of the number (rank) and the symbol (suit) detected by the card detection device 301. Alternatively, the orientation determination device 304 may determine the orientation of the playing card based on an arrangement direction of the number (rank) and the symbol (suit) detected by the card detection device 301. As shown in FIG. 5, the number and the symbol are vertically arranged at the upper left corner of the playing card such that the number (rank) is on the upper side and the symbol (suit) is on the lower side. Therefore, the orientation of the card can be determined by determining the arrangement direction of the number and the symbol.

Alternatively, the orientation determination device 304 may determine the orientation of the playing card based on positions of the pair of combinations of the number and the symbol detected by the card detection device 301. That is, when the card detection device 301 detects two combinations of the number and the symbol, the diagonal line of the playing card can be determined as described above, so the orientation determination device 304 determines the orientation of the playing card based on a direction of this diagonal line.

The position determination device 303 may determine the position of the card based also on the determination of the orientation by the orientation determination device 304. That is, as shown in FIG. 5, since the playing card has combinations of the number and the symbol printed in its upper left corner and lower right corner, it is possible to determine where the playing card exists on the table surface 72 by considering the orientation of the playing card in addition to the positions of the combinations of the number and the symbol.

A hand recognition device 305 recognizes a group consisting of a plurality of playing cards detected by the card detection device 301, and recognizes a hand for each group based on the ranks recognized by the rank recognition device 302 for the plurality of playing cards included in the group. That is, a hand of a player or a dealer is normally determined by a combination of the ranks of the plurality of playing cards distributed to the person.

The hand recognition device 305 groups the plurality of playing cards based on the positions and orientations of the playing cards recognized by the position determination device 303 and the orientation determination device 304. As described above, since the cameras 11 and 12 perform capturing to generate an image every time a playing card is newly drawn from the electronic shoe 51, the playing cards distributed on the table surface 72 increase one by one in the images continuously obtained in this way.

The hand recognition device 305 recognizes the hand in association with a player position. That is, the hand recognition device 305 recognizes which player position the recognized hand belongs to. Alternatively, the hand recognition device 305 may recognize the hand in association with the betting area 77 provided for each player position. Alternatively, the hand recognition device 305 may recognize the hand in association with a bet recognized by a bet recognition device described later and/or a player recognized by a player recognition device described later.

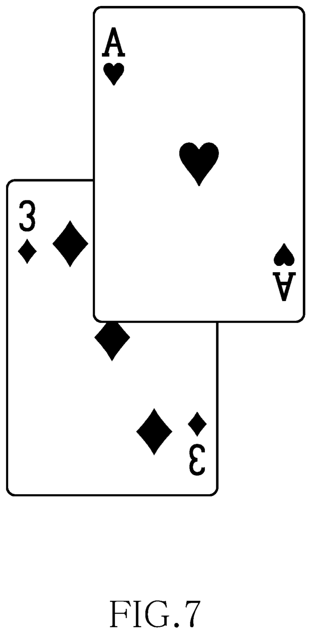

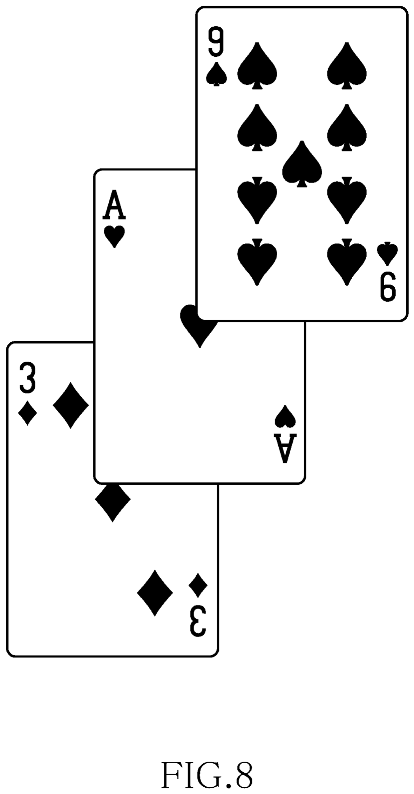

FIG. 7 and FIG. 8 are diagrams showing examples of an arrangement of playing cards according to the embodiment of the present disclosure. FIG. 7 and FIG. 8 show a hand of a certain player. To this hand, a three of diamonds is first given, and then an ace of hearts is given. The second ace of hearts is arranged such that its lower left portion covers an upper right portion of the first three of diamonds, which shows that these two playing cards constitute one hand. As for the ace of hearts which is the playing card drawn later, the entire playing card is observed by the cameras 11 and 12. In blackjack, the dealer manipulates the playing cards and the player does not touch the playing cards, so such an arrangement is realized by the dealer.

As shown in FIG. 8, a nine of spades is added to the hand as a third playing card. The third playing card is arranged such that its lower left portion covers an upper right portion of the second playing card. Accordingly, it can be seen that a group of three playing cards, consisting of the first playing card, the second playing card overlapping the first playing card, and the third playing card overlapping the second playing card, constitutes one hand.

Since each playing card has a set of the rank and the suit represented in the upper left corner and the lower right corner, if playing cards are sequentially arranged such that a lower left portion of a new playing card overlaps an upper right portion of a previous playing card as shown in FIG. 8, a pair of the sets of the rank and the suit in the upper left corner and the lower right corner can be observed by the cameras 11 and 12 for any of the playing cards.

In this way, the hand recognition device 305 can know a distribution order of the cards. Further, even if a playing card drawn later is overlapped on a playing card drawn earlier and distributed on the table surface, and the playing card drawn earlier is partially hidden by the playing card drawn later and placed on the table surface 72, the rank and suit, position, orientation, and the like of the playing card drawn earlier are recognized by an image before the later playing card is drawn.

The hand recognition device 305 determines that a plurality of playing cards partially overlapping each other constitute one hand by grouping the plurality of playing cards. In blackjack, according to an operation rule, a plurality of playing cards constituting one hand are arranged on the table surface 72 by the dealer so as to partially overlap each other. Therefore, it can be determined that the plurality of playing cards partially overlapping each other constitute one hand.

In other games such as baccarat, since an arrangement of a plurality of playing cards constituting a hand is determined by an operation rule of the game, the hand recognition device 305 recognizes each hand based on the rank and suit, position, orientation, and the like of the playing card in accordance with such an operation rule.

A bet recognition device 306 recognizes a gaming chip bet on the betting area 77 by the player based on the images of the cameras 11 and 12. The bet recognition device 306 recognizes which betting area 77 a gaming chip is bet on and a total amount of the bet. The bet recognition device 306 further recognizes, based on the image, a gaming chip of an additional bet (a split, a double down, an insurance, or the like to be described later) during a play, and a gaming chip of a payout paid for a winning bet from the chip tray of the dealer.

The bet recognition device 306 recognizes a stack of bet gaming chips and recognizes each gaming chip constituting the stack by performing image analysis on the images of the cameras 11 and 12 using artificial intelligence. Similarly for the additional bet and the payout during the play, the stack of the gaming chips is recognized, and the gaming chips constituting the stack are recognized. Only a side surface of a plurality of gaming chips constituting the stack can be observed except for a topmost gaming chip. A type (value or denomination) of a gaming chip can be determined by a pattern on the side surface. Therefore, the bet recognition device 306 recognizes the type of the gaming chip by determining the patterns on the side surfaces of the plurality of gaming chips constituting the stack by image analysis.

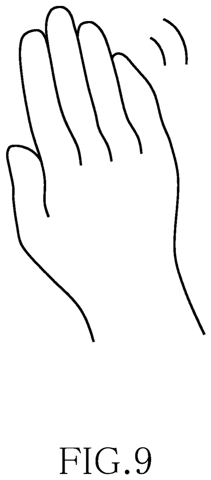

A hand sign recognition device 307 recognizes a hand sign by a player or the dealer by analyzing the images of the cameras 11 and 12 using artificial intelligence. FIG. 9 to FIG. 14 are diagrams showing examples of a hand sign according to the embodiment of the present disclosure. The hand signs in FIG. 9 to FIG. 14 are examples of a blackjack hand sign.

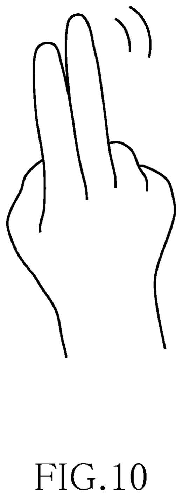

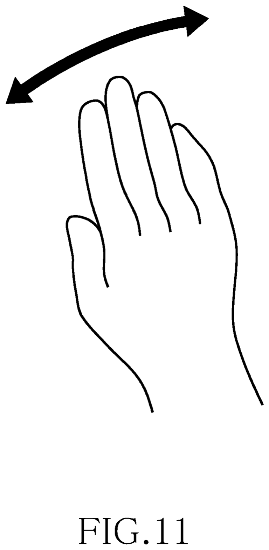

FIG. 9 and FIG. 10 show hand signs meaning "hit". A hand sign of tapping the table surface 72 a plurality of times with a hand having five fingers extended as shown in FIG. 9, and a hand sign of tapping the table surface 72 a plurality of times with an index finger and a middle finger extended together as shown in FIG. 10 mean a hit. FIG. 11 shows a hand sign meaning "stand". As shown in FIG. 11, a hand sign of waving a hand having five fingers extended left and right over the table surface 72 means a stand.

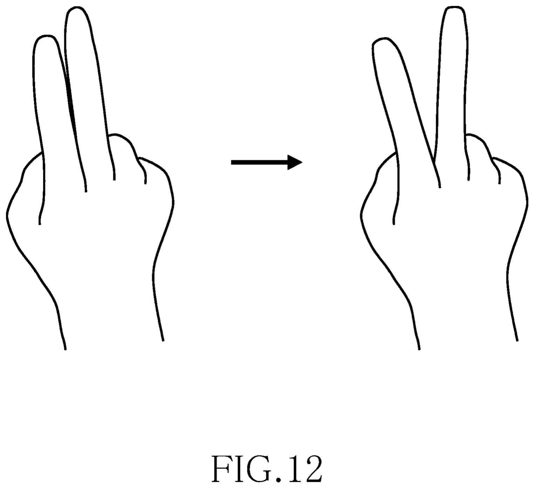

FIG. 12 shows a hand sign meaning "split". As shown in FIG. 12, a hand sign in which an index finger and a middle finger are shown extended together toward the hand, and then the index finger and the middle finger are opened, means a split. Note that the hand sign recognition device 307 may determine a split only by a hand sign in which the index finger and the middle finger are opened. Further, the hand sign recognition device 307 may recognize that any two fingers such as the index finger and a little finger are extended, and determine that it is a hand sign for a split.

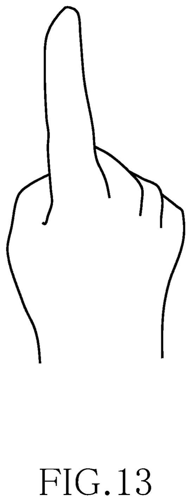

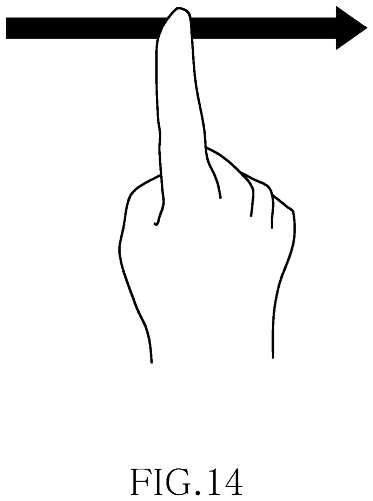

FIG. 13 shows a hand sign meaning "double down". As shown in FIG. 13, a hand sign pointing with an index finger at a gaming chip newly placed for double down means a double down. FIG. 14 shows a hand sign meaning "surrender". As shown in FIG. 14, a hand sign of placing an extended index finger on the table surface 72 and sliding it sideways means a surrender.

The cameras 11 and 12 acquire a plurality of images in time series by continuously capturing images, and the hand sign recognition device 307 recognizes the hand sign by recognizing a shape of a hand, a change in the shape of the hand, and a movement of the hand from the plurality of images.

A player recognition device 308 recognizes a player playing at the game table 7. The player recognition device 308 recognizes a player in a plurality of layers. The player recognition device 308 recognizes a player by analyzing the images captured by the cameras 11 and 12 using artificial intelligence. Player recognition comprises face recognition of the player and posture recognition of the player. Face recognition encompasses functions of various layers such as detection, tracking, analysis, verification, linking, and identification. By detecting a player by face recognition, it is possible to recognize where and how many players are present.

By tracking the player by face recognition using artificial intelligence, for example, even if the player cannot be individually identified, it is possible to analyze what kind of betting activity a certain player is performing throughout a plurality of game plays. Further, by analyzing a facial expression of the player by face recognition using artificial intelligence, a mood of the player can be estimated, and combining and analyzing the estimation of the mood and a play tendency (e.g., a strategy such as a bet amount, a split, a double down, or a side bet) is useful for casino management and marketing.

Further, by matching the face of the player with a registered face by face authentication using artificial intelligence, it is possible to verify whether the player is a player allowed to be there. Furthermore, by linking the recognized face with a skeleton model of the player, it is possible to associate the recognized face of the player with an activity (e.g., betting activity) of the player. Further, by previously registering information for identifying a player in association with a face image of the player, it is possible to identify which registered player the player is.

When importance is placed on the privacy of the player, the above various purposes can be achieved without identifying the player by face recognition. For example, for a player who does not participate in a loyalty program, a recognized face and temporarily given loyalty points are stored in association with each other, and when the player subsequently participates in the loyalty program, the loyalty points given in association with the face before the participation can be validated.

Further, without identifying the player, a face image of the player obtained from the image and a chip ID of a gaming chip possessed by the player may be associated with each other and stored in the player database 41 or the chip database 42, so that when the chip ID is read from an RFID tag of the gaming chip at the game table 7 or a cage, a face image of an owner of the gaming chip is also acquired, and it may be determined whether the player is a correct owner of the gaming chip by determining whether a combination of the read chip ID and the face image of the owner of the gaming chip matches a combination stored in the player database 41 or the chip database 42. Thereby, a countermeasure against money laundering becomes possible.

The player recognition device 308 may issue a warning and prompt the dealer to take a corrective action when an owner associated with a gaming chip and a player who actually bet the gaming chip do not match. This warning may be issued by displaying a warning display on the display panel 61. The corrective action may be requesting presentation of an identification card or prohibiting further participation in the game.

Further, the player recognition device 308 may record a time and a place where such a mismatch is discovered, and information on the player and the gaming chip involved in the mismatch in the player database 41, the chip database 42, and/or the game history database 43. Further, when the above-described mismatch is discovered, the player recognition device 308 may associate the player recorded as the owner and the player who actually made the bet, assuming that chips have been transferred, and record in the game history database 43 that there has been a transfer between those players.

Based on this record, the game management device 30 further analyzes using artificial intelligence based on a game history of the associated players and activities at a non-gaming facility (e.g., staying at a hotel, eating and drinking) to perform marketing for the associated players (e.g., service for a family when the associated players are a family) or to detect fraud such as money laundering.

The above-described face image may be stored as an image itself and used for processing such as comparison, but may be stored as a feature amount of the face acquired by image recognition and used for processing such as comparison. By not handling the face image but instead handling the feature amount of the face extracted from the face image, the privacy of the player is protected.

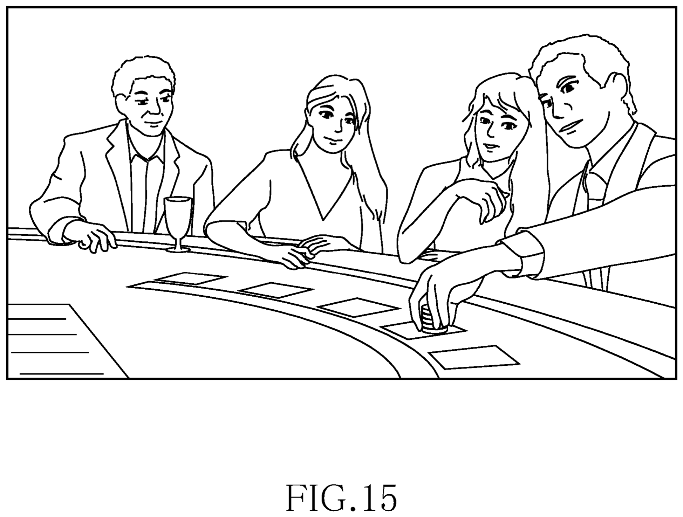

FIG. 15 is a diagram showing an example of an image captured by the camera according to the embodiment of the present disclosure. The player recognition device 308 recognizes a face image and also recognizes a posture of the player. In this image, in addition to the table surface 72 and a gaming chip as a game item thereon, an upper body of the player is shown. The player recognition device 308 performs posture recognition as well as face recognition for the player in the image by using a neural network for the image.

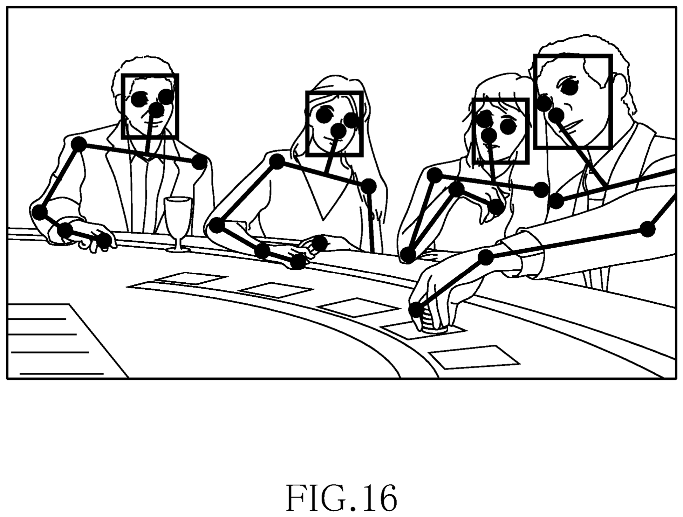

FIG. 16 is a diagram showing a result of performing player recognition on the image of FIG. 15 by the player recognition device according to the embodiment of the present disclosure. The player recognition device 308 recognizes key points of a body including fingers, wrists, elbows, shoulders, a nose, and eyes of the player, extracts a face part, and associates the extracted face part and the recognized key points as belonging to the same person.

A chip operation recognition device 309 first searches for a gaming chip from each of time-series images obtained by continuously capturing images at predetermined time intervals by the cameras 11 and 12. The chip operation recognition device 309 recognizes that the gaming chip has changed, that is, someone has operated the chip, by comparing a gaming chip recognized in a past frame with a gaming chip recognized in a latest frame.

For example, when a gaming chip different from the gaming chip already recognized in the past frame is recognized in the latest frame, the chip operation recognition device 309 recognizes that the gaming chip is newly placed on the table surface 72. When the gaming chip already recognized in the past frame is not recognized in the latest frame, the chip operation recognition device 309 recognizes that the gaming chip has been removed from the table surface 72. Furthermore, when the gaming chip already recognized in the past frame is not recognized at the same position in the latest frame and a gaming chip is newly recognized at another position, the chip operation recognition device 309 recognizes that the gaming chip has moved from an original position to a new position.

The chip operation recognition device 309 further estimates which finger has operated which stack of gaming chips based on a positional relationship between the stack of gaming chips recognized by the bet recognition device 306 and the finger recognized by the player recognition device 308. Specifically, the bet recognition device 306 searches for a gaming chip by sequentially performing image analysis on a plurality of continuously captured images, and when a stack of gaming chips is recognized from an image, the player recognition device 308 performs player recognition on the image.

The chip operation recognition device 309 associates a finger recognized by the player recognition device 308 with a stack of gaming chips recognized by the bet recognition device 306 at a position closest to the stack. Because a part from a finger to a face region is associated and recognized as one player by the player recognition by the player recognition device 308, the chip operation recognition device 309 can eventually associate the stack of gaming chips with the face image. Thus, the functions such as tracking, analysis, verification, and linking described above are realized.

A play recognition device 310 recognizes play content according to a rule of a game based on the hand recognized by the hand recognition device 305 and the bet recognized by the bet recognition device 306. For this purpose, first, the play recognition device associates a hand with a bet. That is, the play recognition device 310 determines which bet recognized by the bet recognition device 306 corresponds to the hand recognized by the hand recognition device 305.

The play recognition device 310 associates a bet with a betting area 77, and associates a hand with the betting area 77, thereby associating the hand and the bet associated with the same betting area with each other. Alternatively, the play recognition device 310 may associate a hand closest to a bet with the bet based on a position of the hand and a position of the bet.

When there are few other players playing at the game table 7 and an adjacent betting area is open, a player may make two or more bets alone in one game. In this case, the play recognition device 310 associates the player with the hand based on the association between the bet and the player and the association between the bet and the hand. Thereby, even when a player is playing with a plurality of hands, the play content and the player can be correctly associated.

The play recognition device 310 determines a game result for each player based on a recognition result of the hand of each player and the hand of the dealer. Further, the play recognition device 310 determines a losing amount and a winning amount of each player based on the bet amount of each player recognized by the bet recognition device 306 and the determined game result.

The play recognition device 310 stores the game result, the losing amount, and the winning amount in the game history database 43 for each game. In the game history, a game date and time, a table number, and dealer information are also stored in association with the game result. Further, the play recognition device 310 stores information on the bet amount, the losing amount, and the winning amount of each player in the player database 41. The play recognition device 310 can obtain information effective for marketing and detect a fraudulent act by statistically analyzing the game history using artificial intelligence. For example, the play recognition device 310 can determine a suspicion of fraud for a player for whom a game history is obtained to a statistically significant degree in which a winning percentage is close to a theoretical value, but a bet amount when losing is small and a bet amount when winning is large.

As described above, the play recognition device 310 can recognize a distribution order of playing cards distributed one by one by sequentially analyzing a plurality of continuous images captured in time series. That is, by comparing a recognition result of playing cards in a past frame with a recognition result of playing cards in a latest frame, a playing card added in the latest frame can be determined. By repeating this, the distribution order of the playing cards distributed one by one can be recognized. However, due to causes such as occlusion, a playing card may not be recognized in a certain frame, and as a result, two or more playing cards may be newly recognized in the latest frame as compared with playing cards recognized previously.

In this case, the play recognition device 310 determines in which order the newly recognized two or more cards were distributed by making a determination according to a rule of the game or an operation rule. For example, in blackjack, an operation is performed according to an operation rule in which a first card is distributed face up in order from a player on a left side to a player on a right side as viewed from the dealer, a first card of the dealer is distributed face down, a second card is distributed face up in order from the player on the left side to the player on the right side as viewed from the dealer, a second card of the dealer is distributed face down, the first card of the dealer is turned face up, and an action such as a hit, a stand, or a split by the player is waited for.

When two or more new playing cards are recognized at one time, the play recognition device 310 determines the distribution order of those newly recognized playing cards based on this operation rule.

The play recognition device 310 recognizes that a split, a double down, an insurance, or a surrender has been performed as a player's action based on the hand recognized by the hand recognition device 305 and the bet recognized by the bet recognition device 306. Specifically, the play recognition device 310 determines whether or not one hand of the player has been divided into two hands based on a plurality of images captured in time series by the cameras 11 and 12.

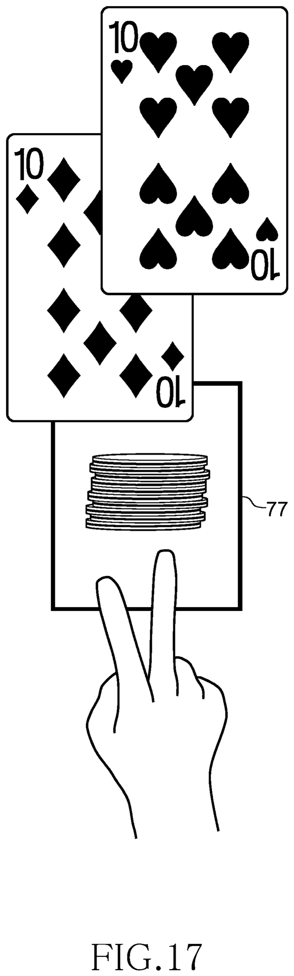

FIG. 17 to FIG. 26 are diagrams showing examples of blackjack actions according to the embodiment of the present disclosure. The actions shown in FIG. 17 to FIG. 26 are recognized by the play recognition device 310 by analyzing a plurality of images captured in time series by the cameras 11 and 12.

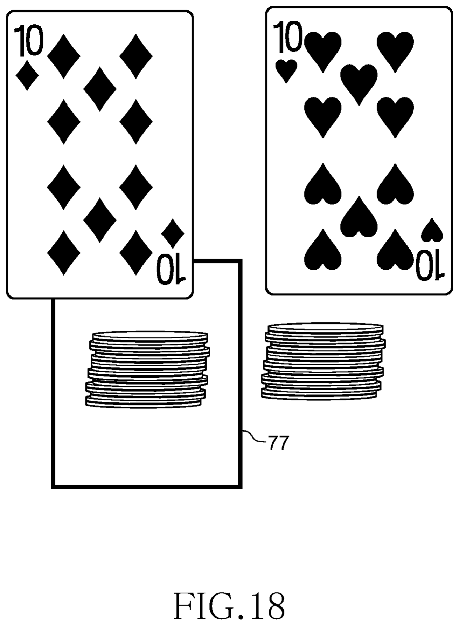

FIG. 17 is a diagram showing an example in which a player instructs a split, and FIG. 18 is a diagram showing a state in which a hand is split following the state of FIG. 17. The play recognition device 310 recognizes that the split has been performed based on determinations that (1) ranks of two playing cards constituting a soft hand (a hand consisting of first two playing cards) are the same, (2) the hand sign recognition device 307 determines that the split is instructed by a hand sign, (3) the two overlapped playing cards have been divided into two, and (4) the bet amount has been doubled.

In the above example, the play recognition device 310 recognizes that the split has been performed based on the determinations of (1) to (4), but it is not necessary to recognize that the split has been performed based on all of these determinations of (1) to (4). For example, the play recognition device 310 may recognize that the split has been performed based only on (3) and (4), may recognize that the split has been performed based only on (1) and (3), or may recognize that the split has been performed based only on (2) or based only on (3). Further, instead of determining that the bet amount has been doubled, the determination of (4) may be a determination that the bet amount has been increased or that a chip stack of betting chips has been added.

When the split has been performed, the play recognition device 310 recognizes that the two hands are hands of the same player, and associates the player associated with an original soft hand with the new two hands. Further, when the original soft hand is associated with a player position or a betting area provided for each player position, the new two hands are associated with the player position or the betting area provided for each player position to which the original soft hand was associated.

Furthermore, when the split has been performed, the play recognition device 310 associates the two hands with an original stack of betting chips and a newly added stack of betting chips, respectively.

Note that the play recognition device 310 determines that there is an error or mistake in an operation when the determination of (1) is negative and the determination of (3) is positive. The case where the determination of (1) is negative is a situation where a split is not permitted by a rule. In such a case, it is not permitted by the rule that the determination of (3) becomes positive, and therefore the play recognition device 310 determines that there is an error or mistake in the operation.

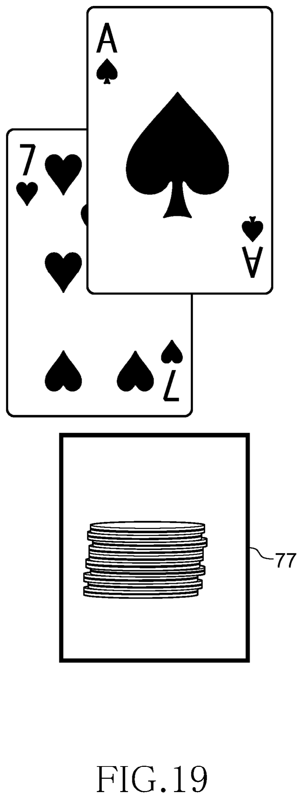

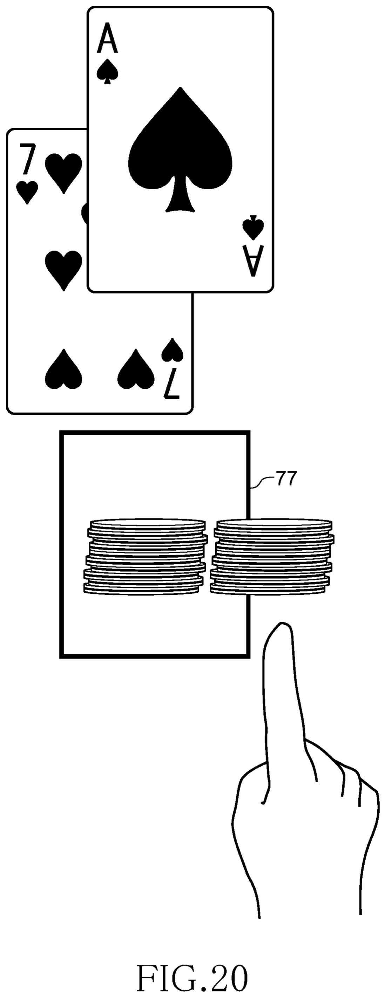

FIG. 19 is a diagram showing an example of a soft hand, and FIG. 20 is a diagram showing a state in which a player performs a double down following the state of FIG. 19. The play recognition device 310 recognizes that the double down has been performed based on determinations that (3) the two overlapped playing cards are not divided into two, (5) the hand sign recognition device 307 determines that the double down is instructed by a hand sign, and (6) the bet amount has been doubled.

The play recognition device 310 may recognize that the double down has been performed based on the determination that the determination of (3) is negative and the determination of (6) is positive, regardless of the determination of the hand sign of (5).

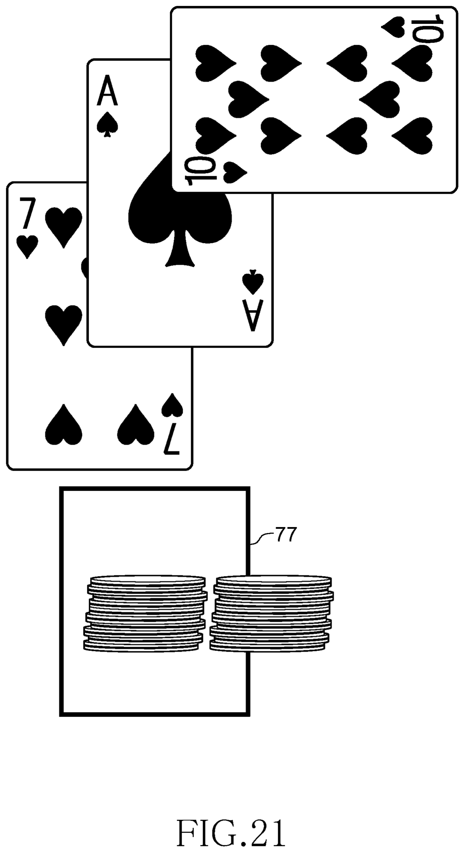

FIG. 21 is a diagram showing a state in which a third playing card is given following the state of FIG. 20. The third playing card is arranged so as to overlap an upper right of the second card, but is placed sideways. Therefore, the play recognition device 310 may recognize that the double down has been performed by determining that (7) the third playing card is placed sideways. In this case, the play recognition device 310 may recognize that the double down has been performed by adding the determination of (7) to the above (3), (5), and/or (6), or may recognize that the double down has been performed based only on the determination of (7).

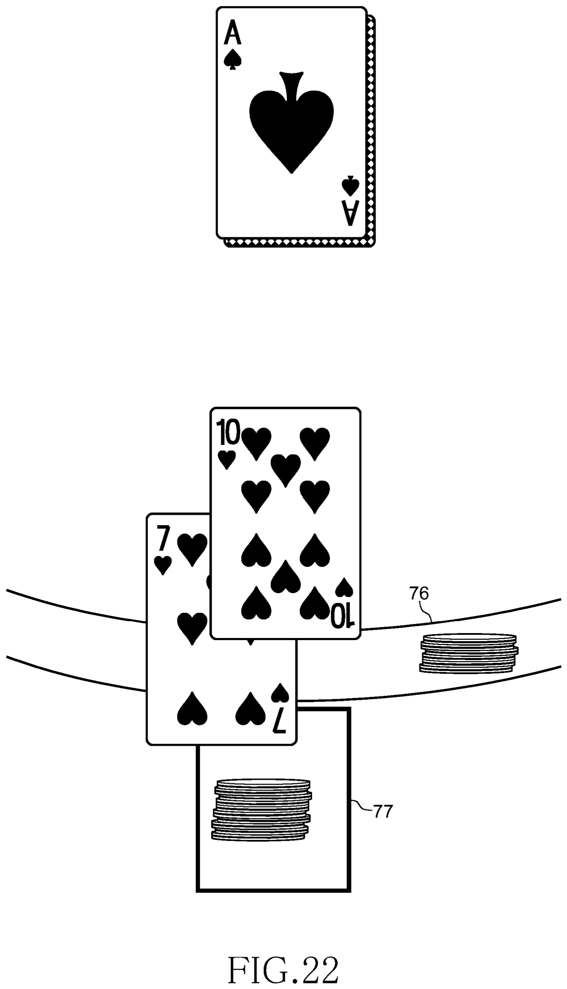

FIG. 22 is a diagram showing an example in which an insurance bet is performed. The play recognition device 310 recognizes that the insurance bet has been performed for the hand recognized by the hand recognition device 305 when (8) a face-up card of the dealer is recognized as an ace by the hand recognition device 305, and (9) it is recognized that a bet has been added to the insurance bet area 76 based on images recognized in time series by the bet recognition device 306. Note that the play recognition device 310 may recognize that the insurance bet has been performed based only on the recognition of (9).

The play recognition device 310 determines that the insurance bet has succeeded when determining that the insurance bet has been performed and a hand of the dealer is recognized as blackjack by the hand recognition device 305. When the face-up card of the dealer is an ace, the dealer confirms whether or not a blackjack is established by checking the second playing card. This confirmation may be performed by the dealer lifting an edge of the second card so that the rank is not visible to the player, or by embedding a dedicated camera in the table surface 72 and causing the camera to read the rank while the second playing card is face down.

When the hand of the dealer is blackjack as a result of the confirmation, the dealer immediately turns over the second card to face up, so that the cameras 11 and 12 capture this playing card, the hand recognition device 305 analyzes the image, and the play recognition device 310 may confirm whether the hand of the dealer is blackjack (whether the insurance bet has succeeded) based on a result of this image analysis.

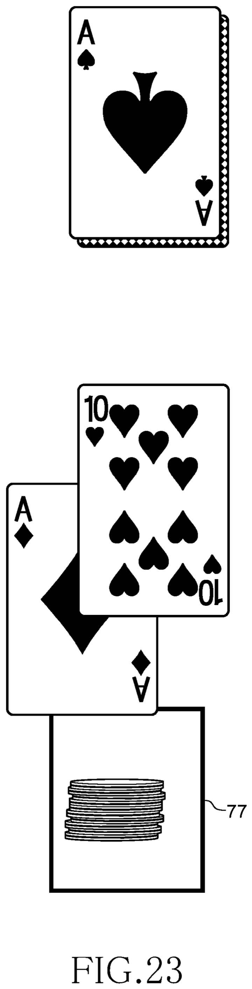

FIG. 23 is a diagram showing an example in which the hand of the player is blackjack and the face-up card of the dealer is an ace. In this case, the player can declare even money. Since the player declares even money verbally, it cannot be known that even money has been declared by recognizing a hand sign, a playing card, or a bet in an image.

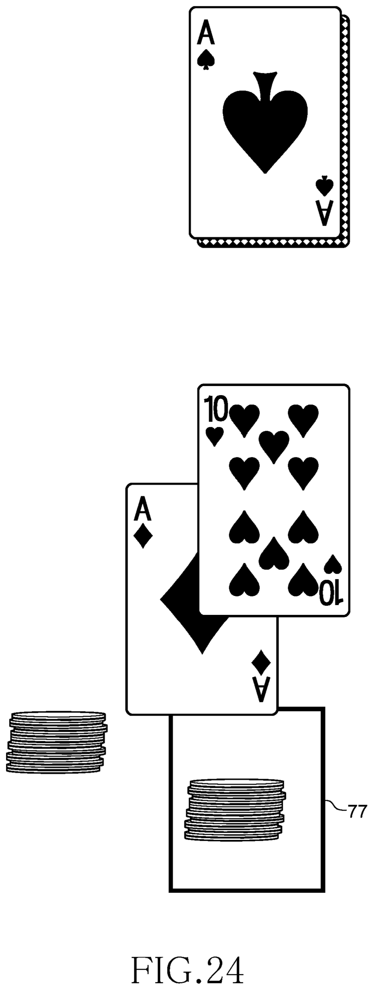

The play recognition device 310 recognizes that even money has been declared by recognizing in an image that a payout of an amount equal to the bet amount has been made before the second playing card of the dealer is turned face up, as shown in FIG. 24.

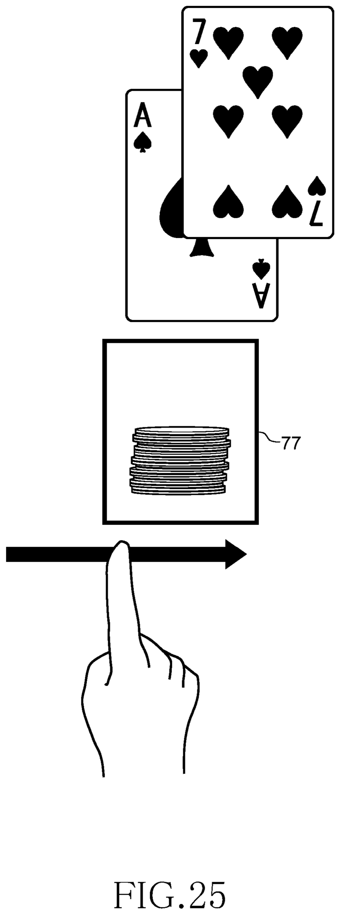

FIG. 25 is a diagram showing an example in which a surrender is performed. The play recognition device 310 recognizes that the surrender has been performed when determining that (10) the bet has been reduced during the game based on bets recognized in time series by the bet recognition device 306, and determining that (11) the hand sign recognition device 307 determines that the surrender is instructed by a hand sign. Note that the play recognition device 310 may recognize that the surrender has been performed based only on either (10) or (11).

Furthermore, when determining that the bet amount has been reduced by the surrender, the play recognition device 310 determines whether a situation allows the surrender based on a rule, and determines whether the reduction reduces half of an original bet based on the bets recognized in time series by the bet recognition device 306.

Returning to FIG. 3, a game state recognition device 311 recognizes a game state. The recognition of the game state comprises recognition of a game phase. The game phase comprises a betting phase, a card dealing phase in which a bet is closed and cards are dealt, and a settlement phase in which a game result is determined, losing chips are collected, and a payout is made for winning chips. The game phase may further include a pause phase in which no one is playing and the game is paused, and a shuffle phase in which cards are shuffled in response to appearance of a cut card.

These game phases are determined by recognizing distribution of playing cards on the table surface 72, turning over from face down to face up, chip variations, hand signs, and the like by image analysis. That is, the game state recognition device 311 recognizes the game state based on the hand recognized by the hand recognition device 305, the bet recognized by the bet recognition device 306, and the like.

Further, the game state recognition device 311 also recognizes a chip exchange (color change) based on an image. The game state recognition device 311 may determine that a color change has been performed when some gaming chips disappear from the chip tray and some gaming chips are added to the chip tray while not in the settlement phase, based on a reading result of the RFID reading device 21 for reading the RFID tag of the gaming chip in the chip tray. The game state recognition device 311 may determine whether the color change has been correctly performed by determining whether a total amount has changed due to the color change, based on the reading result of the RFID reading device 21.

In the game management system 100 of the present embodiment, an RFID antenna is provided in the chip tray 71 and the betting area 77 to read the RFID tag of the gaming chip. However, for dealer support of a buy-in and a color change, a dealer area may be provided between the chip tray 71 as a storage area for gaming chips and the betting area 77, and a third RFID antenna different from the RFID antenna of the chip tray 71 and the RFID antenna of the betting area 77 may be provided therein.

When the game state recognition device 311 reads the RFID tag of the gaming chip with the third RFID antenna in a game phase other than the settlement phase and the card dealing phase, that is, a game phase in which a buy-in is possible, the game state recognition device 311 determines that a buy-in is performed and activates a function for a buy-in process. In the buy-in process, the game state recognition device 311 displays on the display panel 61 that the buy-in is performed, and displays a total amount of the gaming chips read by the third RFID antenna on the display panel 61.

Thereafter, when a gaming chip of a different type but of the same amount as the previously read gaming chip is read by the third RFID antenna, the game state recognition device 311 determines that the transaction is not a buy-in but a color change, displays on the display panel 61 that the color change is performed, and displays a total amount of the gaming chips read later by the third RFID antenna together with the total amount of the gaming chips read previously by the third RFID antenna on the display panel 61.

The game management system 100 may further include a bill discriminator (bill validator). In this case, the game state recognition device 311 may recognize that a buy-in is performed by detecting a bill with the bill discriminator. In addition, a total amount of bills discriminated by the bill discriminator may be displayed on the display panel 61, and a total amount of gaming chips read by the third RFID antenna as gaming chips handed over to a player in exchange for the bills may be displayed on the display panel 61.

As described above, the game state recognition device 311 automatically determines that a buy-in and a color change are performed, and displays amounts related to the buy-in and the color change on the display panel 61, so that the dealer can perform the buy-in and color change processes while checking the display on the display panel 61.

Note that although both the buy-in and the color change are transactions of equivalent exchange, when amounts related to the exchange recognized in these transactions are not equivalent, the game state recognition device 311 displays a warning on the display panel 61 to the effect that the equivalent exchange is not correctly performed.

Further, the game state recognition device 311 also recognizes purchase of chips (buy-in) at the game table 7 based on an image. When a bill is recognized based on the image, it may be recognized that a buy-in is being performed. Furthermore, when recognizing an amount of a bill by image recognition, it may be determined whether the buy-in is correctly performed by determining whether chips corresponding to the amount of the bill recognized by the image recognition have been deducted from the chip tray, based on the reading result of the RFID reading device 21.

The display panel 61 displays results of the above-described various processes by the game management device 30. For example, any result recognized by the game management device 30 may be displayed, such as a recognition result of a hand of each player by the hand recognition device 305, a recognition result of a bet of each player by the bet recognition device 306, a recognition result of a hand sign by the hand sign recognition device 307, a recognition result of a player by the player recognition device 308, and an action recognized by the play recognition device 310.

In particular, the display panel 61 may display a warning of corresponding content when a warning is necessary, such as when an owner of a gaming chip and a player who bet the gaming chip do not match according to the player recognition device 308, when various actions recognized by the play recognition device 310 are not correctly performed, or when settlement is not correctly performed.

### (Modification 1)

The game management system 100 of Modification 1 automatically detects a game phase to improve game efficiency. In the game management system 100, the game state recognition device 311 may recognize the game phase in response to detecting a target object by analyzing an image captured by the cameras 11 and 12. For example, the game state recognition device 311 may recognize start of a betting phase in response to a chip being recognized by the bet recognition device 306. Further, the game state recognition device 311 may determine that a card dealing phase has started in response to a playing card being detected by the card detection device 301.

The player recognition device 308 recognizes a body, a face, and a hand of a player from the image, the bet recognition device 306 recognizes a chip, and the card detection device 301 detects a playing card. The game state recognition device 311 recognizes that the betting phase has started at a time point of a first image frame in which the gaming chip is recognized by the bet recognition device 306. Further, the game state recognition device 311 recognizes that the betting phase has ended and the card dealing phase has started at a time point of a first image frame in which the playing card is detected by the card detection device 301. Furthermore, the game state recognition device 311 recognizes that the card dealing phase has ended and a settlement phase has started at a time point of a first image frame in which a predetermined number of distributed playing cards are detected.

The play recognition device 310 determines that fraud has occurred when a position of the gaming chip changes or when a position, a type, or an appearance order of the playing card differs from a predetermined rule in the card dealing phase. Further, the play recognition device 310 determines a payout amount based on a game result based on the hand recognized by the hand recognition device 305, the bet amount of the player recognized by the bet recognition device 306, and the rule.

Further, the player recognition device 308 may associate a player with a playing position based on a distance between a position of the player and the playing position. The bet recognition device 306 may associate the player with a bet based on the association between the player and the playing position by the player recognition device 308. The bet recognition device 306 may associate the player with the hand based on a distance between the hand of the player recognized by the player recognition device 308 and the hand recognized by the hand recognition device 305.

### (Modification 2)

The game management system 100 of Modification 2 automatically detects a change in the gaming chip and issues a warning in order to reduce a burden on the dealer and improve accuracy of monitoring and warning. The play recognition device 310 compares a bet recognized by the bet recognition device 306 when the game state recognition device 311 recognizes that the game phase is the betting phase with a bet recognized by the bet recognition device 306 when the game state recognition device 311 recognizes that the game phase is the card dealing phase, and outputs a warning when there is a change therebetween.

The cameras 11 and 12 generate a plurality of images in time series by continuously capturing the table surface 72 at predetermined time intervals in the card dealing phase, and output the generated images to the game management device 30. The bet recognition device 306 recognizes a bet from each of the plurality of images in time series, and determines the bet amount. The bet recognition device 306 recognizes a bet when the betting phase is switched to the card dealing phase as an initial bet.

The bet recognition device 306 continues to recognize a bet even after the phase is switched to the card dealing phase, and the play recognition device 310 compares a recognized current bet with the initial bet. The play recognition device 310 outputs a warning when there is a change between the current bet and the initial bet. Note that the play recognition device 310 may output a warning when there is one image frame in which a change has occurred, or may output a warning when a predetermined number of continuous images in which a change has occurred are obtained. Further, the play recognition device 310 may withdraw the warning when the change is no longer detected in a frame subsequent to the frame in which the change is detected in the bet.

### (Modification 3)

The game management system 100 of Modification 3 may detect a change in a bet by a player in the settlement phase in order to reduce damage to the casino. The play recognition device 310 outputs a warning when the bet recognition device 306 recognizes a change in the bet while the game state recognition device 311 determines that the game phase is the settlement phase.

The cameras 11 and 12 capture the table surface 72 at predetermined time intervals, and output continuous time-series images to the game management device 30. The card detection device 301 detects a playing card from the image, and the game state recognition device 311 recognizes that the game phase is the settlement phase based on the detected playing card. The play recognition device 310 outputs a warning when the chip operation recognition device 309 recognizes that a betting chip is added or removed by a player based on recognition by the bet recognition device 306 while the game state recognition device 311 recognizes that the game phase is the settlement phase.

At this time, the chip operation recognition device 309 recognizes that a betting chip is added or removed by a player based on a first frame image not including a hand before a change in the gaming chip is detected, a second frame image in which a hand is detected, and a third frame image after the change in the gaming chip is detected.

Since the positions of the dealer and the player are different, the play recognition device 310 determines that the player has changed the chip based on a movement of the hand in a preset direction and the change in the chip. Further, the player recognition device 308 may determine whether a person operating the gaming chip is a player or the dealer by identifying a player associated with the hand appearing in the image.

### (Modification 4)

The game management system 100 of Modification 4 analyzes a change in a bet between an image in a state where an error is detected regarding an arrangement of gaming chips in payout and collection (stop state) and an image at a timing when betting of the gaming chips ends. The play recognition device 310 determines a change in the bet based on the image in the stop state and the image at the timing when the betting of the gaming chips ends, and outputs a warning. The play recognition device 310 outputs a processing warning in response to a hand of the dealer appearing in or near the betting area.

The game management device 30 acquires the image at the timing when the betting of the gaming chips ends. The game management device 30 acquires the image of the table surface 72 in the stop state. The play recognition device 310 compares gaming chip information (number and amount) between the image in the stop state and the image at the timing when the betting of the gaming chips ends. Further, in response to a change in the gaming chips between the image in the stop state and the image at the timing when the betting of the gaming chips ends, the play recognition device 310 determines whether an area where the gaming chips have changed is any of the betting areas 77.

When the area where the gaming chips have changed is any of the betting areas 77, the play recognition device 310 outputs a warning. Further, the play recognition device 310 recognizes that a hand associated with the dealer has appeared in or near the betting area 77 based on the image in the stop state, and outputs a warning. When the dealer changes a chip, it indicates that a payout is being made. The play recognition device 310 recognizes that the hand in the image is the hand of the dealer based on face recognition or an extending direction of the hand.

### (Modification 5)

The game management system 100 of Modification 5 has a configuration that improves accuracy of recognizing gaming chips and players and accuracy of recognizing a payout. The player recognition device 308 associates a bet in the betting phase with an image of a player (first association). Based on the first association, the player recognition device 308 associates a gaming chip in the settlement phase with the image of the player (second association). The player recognition device 308 identifies the player based on the image of the player, and determines a payout based on a game result and the bet associated with the image of the player in the first association.

When the game state recognition device 311 determines that the game phase is the betting phase, the bet recognition device 306 acquires an image of the cameras 11 and 12 and recognizes a bet by analyzing the image, the player recognition device 308 recognizes a player (first bet recognition), and the play recognition device 310 associates the recognized bet with the recognized player.

When the game state recognition device 311 determines that the game phase is the settlement phase, before payment collection, the bet recognition device 306 acquires an image of the cameras 11 and 12 and recognizes a bet by analyzing the image (second bet recognition). Based on the above association, when it is determined that the second bet recognition is successfully associated with the player, the play recognition device 310 queries personal identification information corresponding to the image of the player. In addition, the play recognition device 310 determines a payout corresponding to the personal identification information based on the second bet recognition and the game result.

### (Modification 6)

The game management system 100 of Modification 6 automatically switches a game state in order to save labor costs and increase game efficiency. The card detection device 301 determines the number of game items (the number of playing cards) on the game table 7 by analyzing an image, and the rank recognition device 302 recognizes identification information (suit and rank) by analyzing the image. When the number of game items reaches a predetermined value, the play recognition device 310 determines a game result according to the number of game items, the identification information, and a predetermined game result generation condition (such as a person whose card total is closer to 9 wins). The game state recognition device 311 switches the game phase to a result processing phase according to the determination of the game result by the play recognition device 310.

The cameras 11 and 12 generate a plurality of continuous time-series images by continuously capturing the table surface 72 at predetermined time intervals, and output the generated images to the game management device 30. The card detection device 301 determines the number of playing cards by analyzing an image to detect a playing card on the table surface 72. In addition, the rank recognition device 302 recognizes the rank and suit of the playing card on the table surface 72 by analyzing the image.

When the number of playing cards reaches a predetermined value, the play recognition device 310 determines a game result according to the number of playing cards, the suit and rank of the playing cards, and a game result generation condition based on a rule of the game. For example, the play recognition device 310 determines that a person who receives cards whose total points are closest to 9 wins when four cards are distributed, according to the game result generation condition based on a rule of a baccarat game.

Before determining the game result, the play recognition device 310 may determine whether a playing card faces face up or face down, and may determine the game result on a condition that the playing card faces face up. Further, the play recognition device 310 may determine the game result on a condition that a playing card and a hand are separated by a predetermined distance or more. Further, the play recognition device 310 may determine the game result on a condition that there is no change in the position of a playing card for a predetermined time based on the recognition result of the position determination device 303.

When the play recognition device 310 determines the game result, the game state recognition device 311 recognizes that the game phase has switched from the card dealing phase to the settlement phase. If the game result cannot be determined when the number of cards is four, the dealer distributes a fifth playing card. The play recognition device 310 determines whether the game result can be determined in response to the number of playing cards increasing to five. In addition, when determining that the distribution of playing cards does not comply with the rule of the game or an operation rule, the play recognition device 310 outputs a warning indicating that there is an abnormality and stops the game.

### (Modification 7)

The game management system 100 of Modification 7 has a configuration for reducing casino losses due to player fraud. The bet recognition device 306 determines whether there is a change in a bet in the betting area 77 based on an image at a timing when the game state recognition device 311 determines that the game phase is the settlement phase. If there is a change in the bet, the bet recognition device 306 determines the betting area 77 related to the change. The chip operation recognition device 309 determines whether a person involved in the change in the bet is a player. The play recognition device 310 outputs a warning when the person involved in the change in the bet is a player.

The bet recognition device 306 acquires an image by the cameras 11 and 12 when the game state recognition device 311 determines that the game phase is the settlement phase. Based on the image, the bet recognition device 306 determines the betting area 77 in which collection and payment of gaming chips occurs among the betting areas 77 as a target area. The play recognition device 310 compares an image of the betting phase and an image of the settlement phase, and when there is a change in a bet in the target area, determines a person corresponding to an added or removed gaming chip based on the recognition result of the chip operation recognition device 309, and outputs a warning when the determined person is a player.

As described above, according to the embodiments of the present disclosure and modifications thereof, improved technology for managing a game in a casino is provided. A plurality of features of the game management system described as the above embodiments and modifications thereof can be arbitrarily combined and applied.

### (Modification 8)

The game management system 100 of Modification 8 makes a prediction regarding casino management based on data accumulated in the game history database 43. In the game history database 43, for example, a game history over a long period of one year or more is stored. The game management device 30 predicts the number of players, the number of plays, a transaction amount, and the like by referring to the game history database 43 and utilizing artificial intelligence. As such artificial intelligence, a prediction model for general demand prediction can be utilized. The game management device 30 can utilize, for example, a linear regression model, a classification model, a decision tree model, a random forest model, a neural network model, or the like as the prediction model.

Based on the demand prediction, the game management device 30 predicts how many players will visit at a specific time, day, and time zone, how many tables should be open at that time, an expected transaction amount or sales amount, and the like. Based on the prediction, the casino takes necessary measures such as assigning dealers, opening game tables, and preparing chips of a necessary amount for the game tables.

Furthermore, for each game table, the game management device 30 predicts a timing at which a fill and a credit are required at the corresponding game table based on the game history of the corresponding game table in the game history database 43. By displaying this prediction result on the display panel 61, the dealer can instruct a fill before the chip tray 71 runs short of gaming chips, and can instruct a credit before gaming chips overflow from the chip tray 71.

### REFERENCE SIGNS LIST

7 Game table
71 Chip tray
72 Table surface
11, 12 Camera
21, 22 RFID reading device
30 Game management device
301 Card detection device
302 Rank recognition device
303 Position determination device
304 Orientation determination device
305 Hand recognition device
306 Bet recognition device
307 Hand sign recognition device
308 Player recognition device
309 Chip operation recognition device
310 Play recognition device
311 Game state recognition device
41 Player database
42 Chip database
43 Game history database
51 Electronic shoe
61 Display panel

## Claims

1. A game management system, comprising:
a camera configured to generate an image by capturing a table surface of a game table from diagonally above; and
a card detection device configured to detect a card by analyzing the image using artificial intelligence to detect a number representing a rank printed on the card placed at an arbitrary position on the table surface, the number having an undefined angle and size when observed.

2. The game management system according to claim 1,
wherein the game table is a blackjack table or a poker table, and
wherein the card is a card constituting a hand of a player or a dealer.

3. The game management system according to claim 1, wherein the card detection device is configured to detect the card by detecting a pair of the numbers.

4. The game management system according to claim 1, wherein the card detection device is configured to detect the card by detecting a set of the number and a mark representing a suit, the number and the mark being in a predetermined positional relationship.

5. The game management system according to claim 1, further comprising:
a rank recognition device configured to recognize the rank of the card detected by the card detection device by analyzing the image using artificial intelligence; and
a hand recognition device configured to recognize a group consisting of a plurality of cards detected by the card detection device, and to recognize a hand for each group based on the ranks recognized by the rank recognition device for the plurality of cards included in the group.

6. The game management system according to claim 1, further comprising:
an orientation determination device configured to determine an orientation of the card based on an orientation of the rank and/or a suit, or an arrangement direction of the rank and the suit detected by the card detection device.

7. The game management system according to claim 1, further comprising:
a position determination device configured to determine a position of the card based on positions of the rank and a suit detected by the card detection device.

8. A game management system, comprising:
a camera configured to generate an image by capturing a table surface of a blackjack table from diagonally above;
a hand recognition device configured to recognize a hand by analyzing the image using artificial intelligence;
a bet recognition device configured to recognize a bet by a chip by analyzing the image using artificial intelligence; and
a play recognition device configured to recognize play content according to a rule of a game based on the hand recognized by the hand recognition device and the bet recognized by the bet recognition device,
wherein the play recognition device is capable of recognizing that a split has been performed and that a double down has been performed as an action of a player, and
wherein the play recognition device is configured to:
make a first determination as to whether or not one hand of the player has been divided into two hands based on a plurality of the images captured in time series;
make a second determination as to whether or not the bet of the player has been increased based on the plurality of the images captured in time series; and
recognize whether or not the split has been performed and whether or not the double down has been performed based on results of the first and second determinations.

9. The game management system according to claim 8, wherein the play recognition device is configured to:
recognize that the split has been performed when:
the play recognition device determines in the first determination that the one hand of the player has been divided into two hands; and
determines in the second determination that the bet of the player has been increased.

10. The game management system according to claim 8, wherein the play recognition device is configured to:
recognize that the double down has been performed when:
the play recognition device determines in the first determination that the one hand of the player has not been divided into two hands; and
determines in the second determination that the bet of the player has been increased.

11. The game management system according to claim 9, further comprising:
a hand sign recognition device configured to recognize a hand sign by analyzing the image using artificial intelligence,
wherein the play recognition device is further configured to recognize whether or not the split has been performed based also on the hand sign detected by the hand sign recognition device.

12. The game management system according to claim 10, further comprising:
a hand sign recognition device configured to recognize a hand sign by analyzing the image using artificial intelligence,
wherein the play recognition device is further configured to recognize whether or not the double down has been performed based also on the hand sign recognized by the hand sign recognition device.

13. The game management system according to claim 9, wherein the play recognition device is configured to recognize that the two hands are hands of the same player when recognizing that the split has been performed.

14. The game management system according to claim 9,
wherein the blackjack table has a plurality of playing positions, and
wherein the hand recognition device is configured to associate the two hands with the same playing position.

15. The game management system according to claim 9, further comprising:
a player recognition device configured to recognize a player participating in a game,
wherein the hand recognition device is configured to associate the hand with the player recognized by the player recognition device, and
wherein the hand recognition device is configured to associate the two hands with the same player.

16. The game management system according to claim 9, wherein the hand recognition device is configured to determine whether the one hand is splittable based on a rule.

17. The game management system according to claim 8, wherein the play recognition device is configured to determine whether or not the bet of the player has been doubled as the second determination.

18. A game management system, comprising:
a camera configured to capture an image of a table surface of a blackjack table;
a hand recognition device configured to recognize a hand of cards distributed on the table surface by detecting a rank and a suit by analyzing the image;
a bet recognition device configured to recognize a bet by a chip placed on the table surface; and
a play recognition device configured to determine whether a blackjack game played on the table surface complies with a rule based on the hand recognized by the hand recognition device and the bet recognized by the bet recognition device,
wherein the play recognition device is configured to:
determine that an insurance bet has been performed for the hand recognized by the hand recognition device based on bets recognized in time series by the bet recognition device when a face-up card of a dealer is recognized as an ace by the hand recognition device; and
determine that the insurance bet has succeeded when it is determined that the insurance bet has been performed and a hand of the dealer is recognized as blackjack by the hand recognition device.

19. A game management system, comprising:
a camera configured to capture an image of a table surface of a blackjack table;
a hand recognition device configured to recognize a hand of cards distributed on the table surface by detecting a rank and a suit by analyzing the image;
a bet recognition device configured to recognize a bet by a chip placed on the table surface; and
a play recognition device configured to determine whether a blackjack game played on the table surface complies with a rule based on the hand recognized by the hand recognition device and the bet recognized by the bet recognition device,
wherein the play recognition device is configured to determine that a reduction is a surrender complying with the rule by:
determining that the bet has been reduced during a game based on bets recognized in time series by the bet recognition device; and
when determining that the reduction has been made, determining whether a situation allows the surrender based on the rule, and determining whether the reduction reduces half of an original bet based on the bets recognized in time series by the bet recognition device.

20. The game management system according to claim 19, further comprising:
a hand sign recognition device configured to recognize a hand sign by analyzing the image using artificial intelligence,
wherein the play recognition device is configured to recognize that the surrender has been performed based on the hand sign recognized by the hand sign recognition device.
